# EUROPEAN PATENT APPLICATION

(11) **EP 2 745 901 A1**
(43) Date of publication of application: **25.06.2014**
(21) Application number: 12198165.8
(22) Date of filing: 19.12.2012
(51) Int. Cl.: B01D 1/18, B01J 2/04, C05C 9/00

(54) **Method for transforming a prilling tower, in particular in a plant for the synthesis of urea**

(71) Applicant: Urea Casale SA, 6900 Lugano-Besso (CH)
(72) Inventor: Bedetti, Gianfranco, 6900 Lugano-Besso (CH)
(74) Representative: Zardi, Marco

(57) **Abstract**

Method for transforming a prilling tower intended for converting a liquid into a solid product, particularly for a urea solution, wherein the prilling basket is removed; a vertical tubular wall is built inside the tower, with at least an upper portion permeable to air; new nozzles are installed on top of the tower, to generate a polydispersed flow of drops of liquid, with descending motion, inside a channel defined by said wall; means for distributing solidification air (3) in a gap (15) defined between the outer casing of the tower and said wall (8) are provided; the tower thus transformed made a new granulation process, instead of the known prilling process, obtaining granules with high hardness equal to the hardness obtained by conventional granulation plants.

## Description

### Field of application

The invention concerns a method for transforming a prilling tower, particularly for a urea synthesis plant.

### Prior art

Many urea synthesis plants comprise a finishing section intended to convert liquid urea (known as urea melt) synthesised by the plant into a solid product. One of the known techniques for this purpose consists of prilling. Basically, prilling consists of cooling and solidifying droplets of liquid inside a tower, with cooling air in countercurrent. Through the effect of the contact with air, the droplets solidify generating solid particles known as prills.

A prilling tower comprises an external structure made of reinforced concrete, with a circular or rectangular section. Dispensing means for the liquid urea are housed on top of the tower, which can comprise a rotary perforated basket or, more simply, some showerheads. The cooling air flows inside the tower from the bottom upwards, with natural or forced draft.

It is known, however, that mechanical features of the solid product obtained with this technique are not fully satisfactory. The prills have a certain porosity that makes them fragile and may cause product crumbling during transportation, storage, etc. Moreover, the maximum diameter of the prills generally does not exceed 2 mm, even using large towers.

Such problems are caused by the very nature of the cooling process. Inside the tower, a substantially monodispersed flow of liquid droplets is produced, where drops are all substantially the same size (apart from a statistical deviation) set by the spraying means, for example by the holes of the rotary basket. Solidification proceeds from outside to inside of a drop, under the effect of its falling in counter-current with air; as a consequence the solid tends to be porous.

It is also known that it is possible to obtain a solid product with good mechanical features by means of fluid bed granulation, which is an alternative process to prilling. However, in a plant originally equipped with a prilling tower, the installation of a granulation section (replacing the tower) would involve high costs and would require demolishing the tower or leaving it unused. All of this would not be advantageous. It should be noted that a prilling tower is a large and expensive item; typically, the towers of urea plants have a height of tens of metres (even up to 100 m) and a diameter of over 10 - 20 metres or even more for natural draft towers.

Such a problem is still unsolved and can occur, similarly to what occurs in the field of urea, in the treatment of other substances that are produced in liquid state and need to be converted into solid form for sale, for example ammonium nitrate, ammonium sulphate.

### Summary of the invention

The invention proposes a method for transforming an existing prilling tower, so as to obtain a product with much better characteristics. The transformed tower carries out substantially a new granulation process, and no longer prilling, and it is able to produce granules with characteristics similar to those obtainable with conventional fluid bed granulators. The invention thus aims to improve the quality of the solid product obtained in a prilling tower based finishing section, especially in the field of urea, exploiting the existing tower. The aims of the invention are accomplished with a method for transforming a prilling tower intended for converting a liquid into a solid product, the method comprising at least the steps of:
a) removing means for spraying said liquid originally provided in the tower;
b) making a substantially tubular and vertical wall inside the casing of said tower, at least an upper portion of said wall being permeable to air, and said wall defining a substantially vertical channel inside the tower;
c) installing a set of new nozzles on top of said tower, said nozzles being arranged to generate a polydispersed flow of drops of liquid, with descending motion, inside said channel defined by said wall installed in the tower;
d) providing means for feeding said nozzles with the available liquid phase;
e) providing means for distributing solidification air in a gap defined between the outer casing of the tower and said wall or between the outer casing and a portion permeable to air of the wall itself.

The aforementioned wall, newly installed inside the tower, hereafter is called permeable wall. It should be noted that, in some embodiments, only an upper portion of the wall is actually permeable to air. In order to obtain permeability to air, for example, perforated metal sheets or gratings, or the "slotted" walls technique that is described in EP 2 014 356, may be used.

Said permeable wall has a cross section, in a plane perpendicular to the vertical axis of the tower, with a circular or more preferably polygonal shape. The polygonal shape is preferred for constructive reasons since it allows the realization of the wall with a series of plates or flat metal sheets, which can be assembled directly inside the tower. For example, a way of making the permeable wall essentially comprises the following steps:
- making a support structure fixed to the outer shell (casing) of the tower;
- fixing a series of vertical beams to said structure:
- fixing a series of substantially flat elements to said vertical beams, thus forming the permeable wall itself.

The support structure is preferably a truss structure, equipped with suitable struts to support the weight of the permeable wall and support the overhang with respect to the anchoring wall. The shell of the tower is normally made of reinforced concrete and the fixing of the support structure can be carried out with dowels or equivalent means suitable for anchoring steel beams to a reinforced concrete wall.

The new nozzles, capable of generating the polydispersed flow, are installed on top of the tower, replacing the original means for spraying the liquid (for example a prilling basket). The transformation method can comprise the making of a top structure, inside the tower, suitable for supporting the nozzles; said structure, in some embodiments, must be permeable to gases (e.g. reticular) to allow extraction of air from the top. In a possible embodiment, for example, a beamwork is provided, which is fixed to the existing slab of the tower, and which supports the nozzles and the feeding tubes of the liquid.

The prilling tower thus transformed makes a solidification process that is totally different with respect to the original prilling process. Said solidification process is substantially a granulation process that takes place inside the channel defined by the new permeable wall. Said channel therefore can also be called granulation channel.

The polydispersed flow of drops of liquid, generated by the new nozzles, enters the granulation channel with descending motion and comes into contact with solidification air, that (at least partially) emerges from the porous wall. The smallest drops inside the polydispersed flow (having diameter close to the minimum size in the polydispersed flow, for example a few hundreds of microns) solidify quickly, given the small mass, and slow down with respect to the larger drops through contact with air. The solid particles thus formed collide (in an inelastic manner) with other drops belonging to the polydispersed flow, which are still in liquid state and are generally larger in size and animated by high speed. A solid particle in the granulation channel for example is incorporated by a larger drop, which in turn solidifies, and so on obtaining granules. It should be noted that the granulation process is able to self-support without the insertion of solid material (seeds) from the outside, and without a pre-granulation.

Preferably, the polydispersed flow comprises drops of variable diameter between 0.1 mm (100 µm) and about 2.5 mm, and more preferably between 0.2 mm and 2 mm. The newly installed nozzles have orifices of differentiated diameter so as to generate the desired flow.

Some variant embodiments are now described.

According to various embodiments of the invention, it is possible to provide air feeding means so as to generate inside the granulation channel a co-current or counter-current airflow with respect to the descending flow of the drops of liquid.

Co-current embodiments are generally simpler to implement; however, counter-current operation allows an increase of the residence time of the liquid in the granulation channel, for a given size of the tower and other conditions. Therefore, the counter-current embodiments may be preferable when the tower to be modified is relatively small, for example a forced draft tower about 50 metres tall; vice-versa, a co-current embodiment may be preferred when a large tower is available, for example about 100 m high. According to the situations, modifications to the tower will be required, like for example opening passages in the outer shell, means for extracting air from the base or from the top of the tower, etc. which can be determined by the man skilled in the art.

An option of the invention consists of installing batteries of side nozzles on the bottom part of the permeable wall. Such side nozzles allow growing of the solid product generated in the first (upper) part of the channel, with a substantially conventional granulation process. The installation of these side nozzles is advantageous to obtain granules of large diameter (e.g. > 3 mm). In other embodiments it is possible to provide an additional external granulator of the conventional type, for example with a fluid bed. The choice to install the side nozzles, or possibly an external granulator, essentially depends on the height of the available tower and the desired size of the granules.

The sieving of the solid product formed inside the tower is carried out by a suitable sieve installed at the base of the tower itself, or outside the tower.

In some preferred embodiments, the method also comprises the installation of means for introducing secondary cooling air into the granulation channel, preferably in an end section of the channel itself. Said secondary air, which mixes with the main air, makes it possible to improve the cooling in the end part of the granulation path, where the primary solidification air (introduced upstream) comes with a relatively higher temperature due to heat exchange with the liquid phase.

If the airflow is co-current, the permeable wall can be cylindrical (defining an area with constant section) or slightly conical. If said flow is counter-current, the wall is advantageously conical with increasing section from the bottom upwards.

The free outflow cross-section of the air through the permeable wall (for example the total cross section of the holes of the perforated metal sheets of which it consists) preferably increases proceeding from the bottom upwards, when the side nozzles are not installed.

In the counter-current embodiments, the air leaving the upper section of the channel must be conveyed to a scrubber arranged at ground level. For this purpose, a descending tube (downcomer) can be installed outside or inside the tower. In some embodiments, it is possible to install a second coaxial wall inside the wall of the granulation channel, to define the aforementioned descending tube. In this case, the granulation channel has an annular section.

Another preferred aspect consists of reintroducing the fine particles produced, with the exception of the powders that must be treated in a known scrubber. The transformation method can, consequently, also comprise the provision of a recirculation line of the fine particles and relative nozzles for reintroducing the fine particles in the granulation channel. The term of fine particles denotes the solid granules that, at the outlet of the granulation channel, do not reach a threshold size. The fine particles can be reintroduced at the top of the tower, or at an intermediate point, for example about halfway up, especially if they are of intermediate size.

The method according to the present invention makes it possible to obtain a solid product of high hardness and, if the recirculation of the fine particles is provided, an excellent uniformity of size, substantially having the same quality as conventional granulation processes. The great advantage of the invention is that the above is obtained without installing the expensive granulation apparatuses, but exploiting the existing prilling tower. It should also be noted that, thanks to the features of the new process, the expensive tablet-makers, or similar equipments for generating the seeds, are not required.

The advantages of the invention will now be elucidated with reference to some example embodiments and with the help of the figures.

### Description of the figures

Figs. 1, 2, 3 and 4 schematically show a transformed prilling tower according to some preferred variants of the invention.
Fig. 5 shows a simplified cross section of a transformed prilling tower, and in particular shows the support system of the permeable wall installed in the tower.
Fig. 6 is similar to Fig. 5 but refers to a tower with a rectangular cross section.
Fig. 7 shows a side view of the support system.
Fig. 8 schematically shows the granulation process that is carried out in the modified tower, in particular in the entire tower or, in case side nozzles are installed for example according to Fig. 3, in the upper part of the tower.
Fig. 9 shows the conventional growth process that is carried out in the lower part of the tower, when equipped with side nozzles according to Fig. 3.

### Detailed description

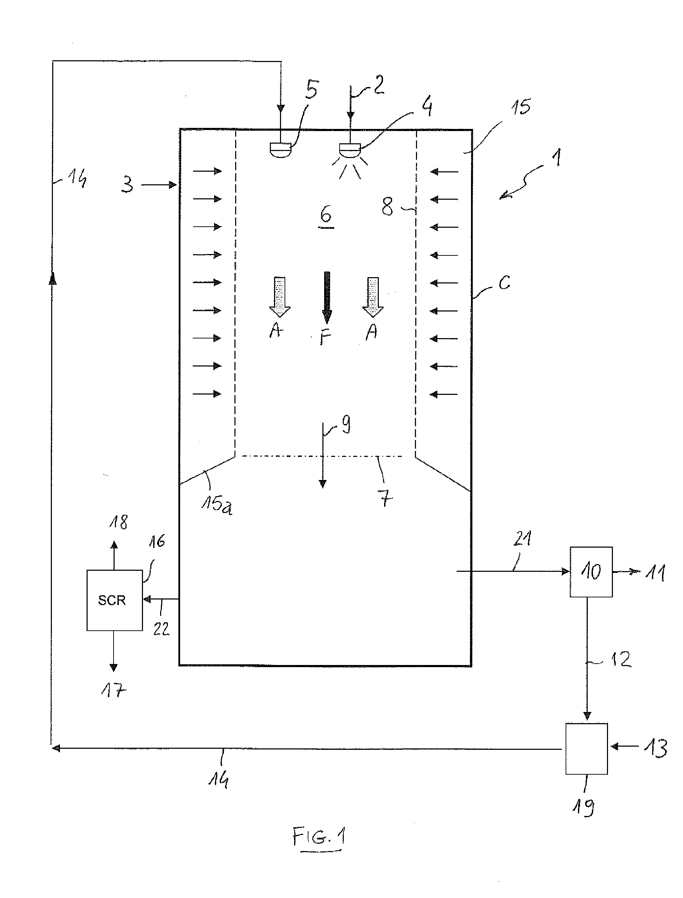

The scheme of Fig. 1 shows a prilling tower 1 that has been transformed according to one of the possible embodiments of the invention.

A new wall 8 is installed inside the tower 1, thus defining a substantially vertical channel 6 inside the tower itself. A gap 15 is defined between the outer shell C of the tower and the new wall 8. The wall 8 is permeable to air, so that air introduced into the gap 15 can flow inside the channel 6.

The wall 8 is preferably formed by perforated metal sheets that are suitably anchored to the shell C; a preferred way for anchoring will be described hereafter in a greater detail. Said wall 8 can have a circular or preferably a polygonal section; in general it is slightly conical in order to vary the air speed along its path.

The channel 6 substantially extends from top of tower 1 up to an outlet section denoted with the broken line 7. Said line 7 is an imaginary line and does not correspond to a wall physically present in the tower.

The original liquid spraying means, for example a prilling basket, are removed. According to the invention, a set of new nozzles 4 is installed at the top of the tower. The feeding line of the liquid phase 2 is connected to said set of nozzles.

Said nozzles 4 are able to generate a polydispersed flow of drops of liquid, with a descending motion, inside the channel 6.

Moreover, the granulation plant is equipped with means for distributing a flow rate of air 3 (called solidification air) in the gap 15. Said gap 15 is closed at the bottom by a bottom wall 15a.

The example of Fig. 1 refers to an embodiment of the co-current type. The air 3 inserted in the gap 15 emerges from the permeable wall 8, flows downwards and crosses the section 7 reaching the lower part of the tower 1. In other words it has a descending motion in the channel 6, in co-current with respect to the liquid delivered by the nozzles 4. In the figures, the arrows A indicate the direction of the air and the arrow F indicates the direction of the flow formed by the liquid drops and by the solid granules.

The output granules, indicated by the arrow 21, are directed to a sieve 10 that separates granules 11 and fine particles indicated with the line 12. The sieve can be installed inside or outside the tower; in any case a duct 21 is provided crossing the shell C of the tower. The fine particles 12 (with the exception of the powders) are preferably reintroduced into the channel 6, on top of the tower, where suitable nozzles 5 are installed. The reintroduction of the fine particles is preferably operated pneumatically with transportation air 13, for example by means of an ejector 19. The line 14 indicates the transportation of the fine particles to the nozzles 5.

The air introduced with the flow 3 must be extracted from the base of the tower 1 and treated in a scrubber 16 to reduce the powders. The line 22 denoted the extraction of the air containing powders from the bottom of the tower. In urea plants, for example, the air inside the scrubber 16 is contacted with a liquid solution containing urea, so as to dissolve the powders and obtain a liquid recirculation solution 17 and purified air 18. The solution 17 is recirculated in the urea plant according to a known technique.

In order to improve the cooling it is possible to feed a flow of fresh cooling air (also known as secondary air) in the lower part of the path 6. For example, the gap 15 can optionally be divided by a wall (not indicated in Fig. 1) obtaining an upper gap for the entry of primary solidification air 3, and a lower gap fed with secondary air, which is substantially dedicated to the cooling of the flow.

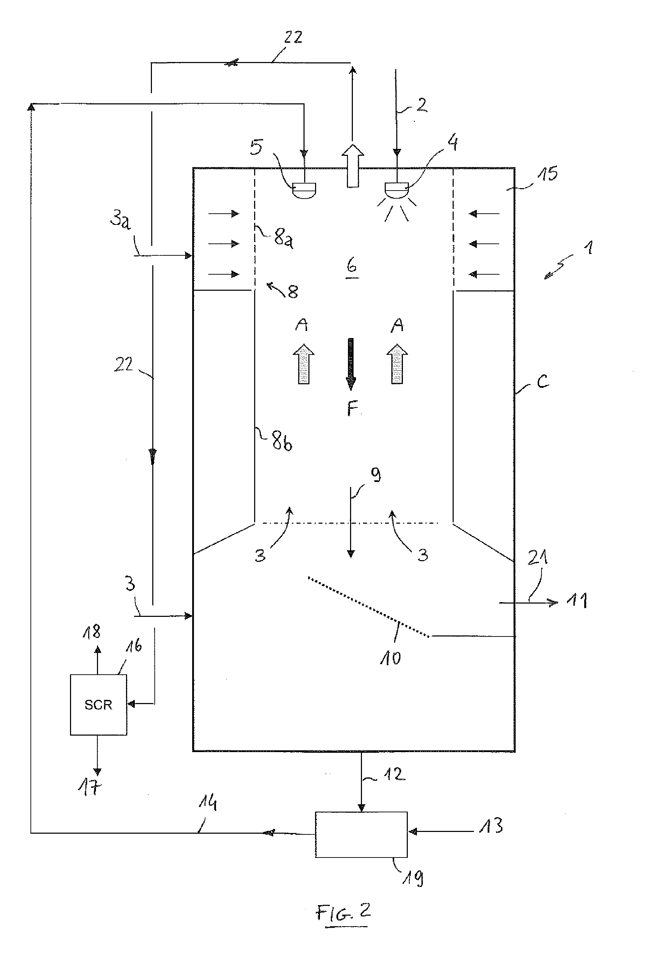

Fig. 2 shows a variant of Fig. 1, i.e. another way of transforming a prilling tower. In this case, the transformed tower operates with air in ascending motion inside the channel 6 and therefore the operation can be defined in counter-current as indicated by the arrows A and F. The air 3 is fed in the lower part of the tower 1; the air is then extracted from top of the tower and conveyed to the scrubber 16 through the line 22 that, in this case, comprises a descending tube outside the tower.

The wall 8, in this embodiment, has an upper portion 8a that is permeable to air, and a lower portion 8b that is not permeable to air. Advantageously, an airflow 3a is fed through the gap 15 and the permeable portion 8a. Said flow 3a improves the process providing an additional flow of fresh air in the area adjacent to the nozzles 4 and 5, where the polydispersed liquid and possibly the fine particles are introduced. Preferably, the flow 3 represents the major portion of the overall air feed to the tower 1. For example, the flow 3 is two thirds of the total air and the remaining 1/3 is represented by the flow 3a.

Fig. 2 also shows, as an example, a sieve 10 inside the tower. It also shows the recirculation of the fine particles 12, with transportation air 13, which is substantially analogous to Fig. 1.

The choice of sieving inside (Fig. 2) or outside the tower (Fig. 1) depends on the requirements of the specific case, including height of the available tower, size of the desired granules, etc.

In an embodiment like the one of Fig. 2, the counter-current air tends to slow down the liquid and consequently the residence time inside the granulator increases. This provides best exploitation of the available height and increases the size of the granules at the exit of the channel 6. A transformation in co-current according to Fig. 1 is generally simpler to carry out and can be preferred for towers of relevant height (about 80-100 m) where, thanks to the available height, it is possible to obtain sufficiently big granules (for example 2.5 mm) also with the co-current process.

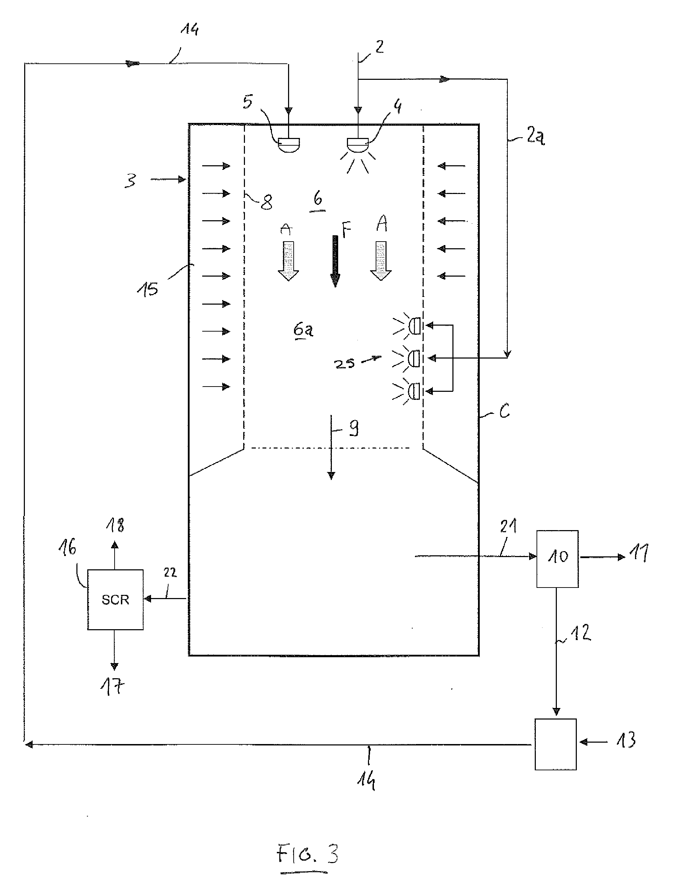

Fig. 3 shows a variant of Fig. 1 in which (optional) side nozzles 25 are also installed that deliver a part 2a of the feeding liquid 2. The side nozzles are located in the lower part of the column 6 and provide growth in the area 6a of the granules previously formed in the highest part of the tower. The side nozzles can also be installed in the various other embodiments of the invention.

It should also be noted that, in some variants, it is possible to feed an external growth granulator with the product obtained in the tower 1.

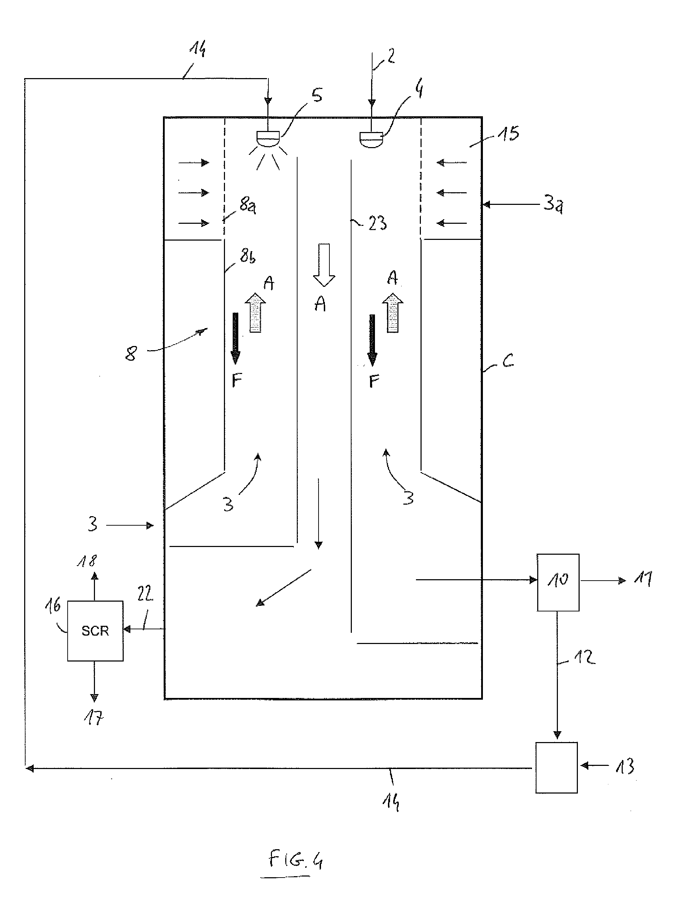

Fig. 4 shows another variant that is similar to that of Fig. 2. In this variant the descending tube 22 of Fig. 2 is built inside the tower 1 and is defined by a wall 23 internal to the permeable wall 8. The extraction of the air takes place also in this example from the bottom of the tower 1, directed to a scrubber 16.

It should be understood, by observing Fig. 4, that the channel 6 in this embodiment assumes a ring-shaped section comprised between the new walls 8 and 23 assembled inside the tower 1.

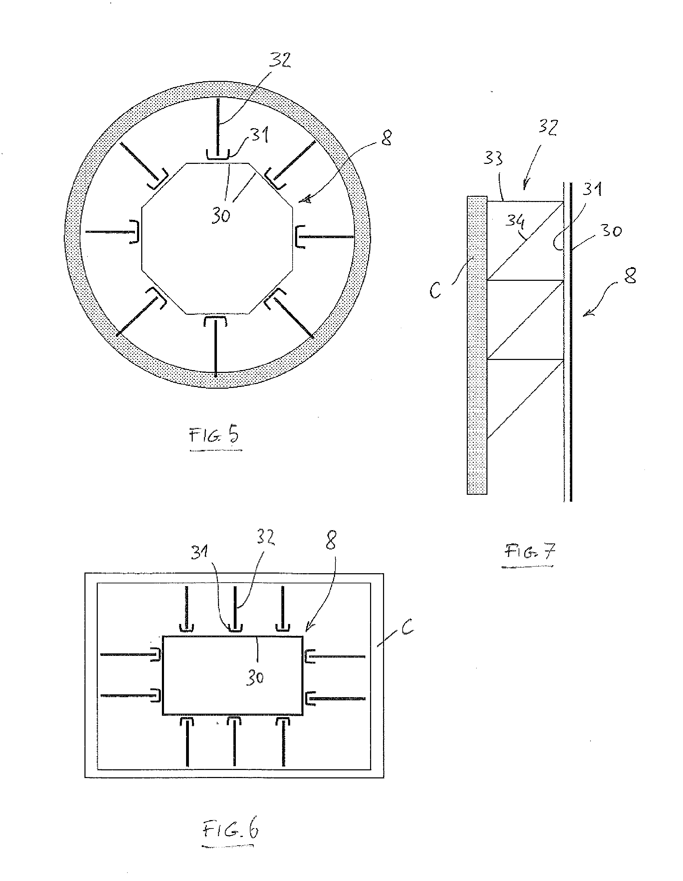

Figs. 5 to 7 show a preferred way to firmly anchor the wall 8 (and possibly, if present, the wall 23) to the shell of the tower. The wall 8 (Fig. 5 and Fig. 6) is made essentially of a plurality of flat elements 30 (for example steel metal sheets), supported by vertical beams 31. Said beams 31 in turn are supported by a reticular support structure 32, which can be anchored to the shell C with dowels or equivalent means. Fig. 7 shows the structure 32 that essentially comprises canti-levered beams 33 and struts 34 to support the weight of the metal sheets 30.

One possible way of assembling the wall 8 is as follows. The structure 32 is built directly inside the tower 1; the vertical beams 31 are positioned by fixing them to the structure 32; then the metal sheets 30 are positioned by fixing them to the vertical beams 31. Before this, the prilling basket originally installed in the tower must be removed, as well as the related auxiliaries like for example electrical boards, support structures, etc.

It should be noted that an octagonal wall has been drawn in Fig. 5 for the sake of simplicity; in practice, especially inside cylindrical towers, it will be advantageous to make walls with a greater number of sides, so as to approximate a cylindrical wall. Consequently, the number of beams 33 will be high, making a dense reticular structure for supporting the plates 30. The plates 30 are advantageously fixed with slotted holes and/or by providing a certain overlapping, to take into account the different thermal expansion during operation.

Other features of the invention are as follows. The support of the set of nozzles 4, and possibly of the nozzles 5 for the fine particles, can be entrusted to a reticular beamwork, fixed to the existing slab of the prilling tower. Said beamwork supports the tubes for distribution of the liquid 2 and the nozzles 4. The reticular structure is preferred also because it allows the passage of air when air is to be extracted from the top of the tower (counter-current flow according to Figs. 2 and 4). In some variants, the tubes of the liquid can have a load-carrying function and support the nozzles.

Preferably, a mobile service platform is also made inside the channel 6. Said platform is suspended by cables or chains (e.g. with winches) and is vertically mobile inside the channel 6, being suitably guided, allowing access to the nozzles 4 and if necessary to the inner side of the wall 8 for cleaning or maintenance.

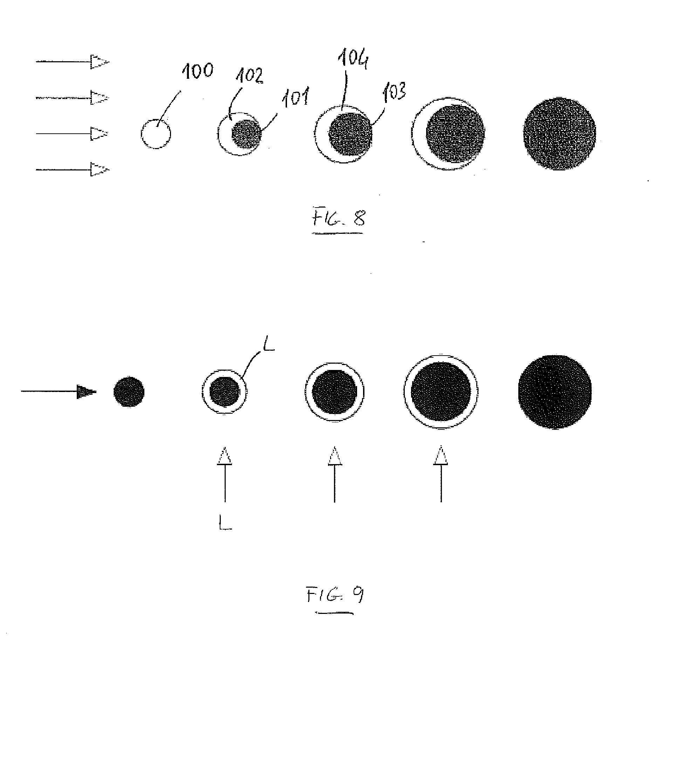

The granulation process that takes place in the modified tower according to the invention is exemplified in Fig. 8. A droplet of liquid 100 of a small size (e.g. less than 500 microns), belonging to the polydispersed flow generated by the nozzles 4, greatly slows down and quickly solidifies upon contact with air generating a small solid granule 101. Meanwhile, another larger drop 102 slows down less quickly. This drop 102 hits the granule 101 forming the solid granule 103 thanks to the cooling of the air. The solid 103 thus formed is in turn hit by another drop 104 of even greater size and so on obtaining the final granule as shown by the sequence in Fig. 8.

If side nozzles are not installed, the process of Fig. 8 is carried out substantially along the entire height of the tower, i.e. of the channel 6. If, on the other hand, the side nozzles 25 are installed, the conventional granulation (growth) process as schematized in Fig. 9 takes place in the lower part of the tower. In this case, the granule grows through the effect of deposition of a thin liquid layer L which solidifies as depicted. For example, also looking at Fig. 3, the process of Fig. 8 takes place in the upper part 6 whereas the process of Fig. 9 (conventional) takes place in the part indicated with 6a where granules are hit by the liquid sprayed by the side nozzles 25.

The man skilled in the art will appreciate that the process is completely different with respect to the original prilling process. The invention makes it possible to achieve the outlined purposes, obtaining a solid product with high hardness by means of the transformed prilling tower.

## Claims

1. A method for transforming a prilling tower intended to convert a liquid phase into a solid product, the method comprising at least the steps of:
a) removing means for spraying said liquid originally provided in the tower;
b) making a substantially tubular and vertical wall (8) inside said tower, said wall defining a substantially vertical channel (6) inside the tower, and wherein said wall (8) is permeable to air, or at least an upper portion (8a) of said wall is permeable to air;
c) installing a set of new nozzles (4) on top of said tower, said nozzles being arranged to generate a polydispersed flow of liquid drops, with a descending motion, inside said channel (6);
d) providing means for feeding said new nozzles (4) with at least a part of the available liquid phase (2);
e) providing means for distributing air (3, 3a) in a gap (15) that is defined between the outer casing (C) of the tower (1) and said wall (8), or between the outer casing of the tower and a portion permeable to air (8a) of the wall itself.

2. Method according to claim 1, comprising the installation in the lower area of said channel (6), of nozzles (25) of the same type as said new nozzles (4).

3. Method according to claim 1 or 2, comprising the installation of air feeding means (3) in the lower part of the tower, obtaining an ascending air flow inside said channel (6) defined by said wall (8) installed in the tower itself.

4. Method according to claim 3, comprising the installation of a descending tube (22) outside or inside the tower, to convey air extracted from the top of the tower towards an external scrubber (16).

5. Method according to claim 4, wherein said descending tube (22) is made inside the tower (1), by making a second wall (23) internal with respect to the wall (8) that defines said granulation channel (6).

6. Method according to any one of the previous claims, also comprising the installation of a sieve (10) inside or outside the tower (1).

7. Method according to claim 6, comprising the installation of a line for recirculating fine particles (12) separated through said sieve (10), and also comprising the installation in the tower of top nozzles (5) suitable for generating an airflow containing the fine particles, for the reinsertion of said fine particles in said channel (6).

8. Method according to any one of the previous claims, wherein the new nozzles (4) for dispensing the liquid (2) are suitable for generating a polydispersed flow comprising drops of variable diameter between 0.1 mm (100 µm) and about 2.5 mm, and preferably between 0.2 mm and 2 mm.

9. Method according to any one of the previous claims comprising the making of a reticular structure on top of the tower, to support the set of new nozzles (4).

10. Method according to any one of the previous claims comprising the following steps to anchor the permeable wall (8) to the casing of the tower (1):
- making a support structure inside the tower, fixed to the outer shell of the tower itself;
- fixing a series of vertical beams to said structure:
- fixing a series of substantially flat elements to said vertical beams, said plates forming the tubular wall.

11. Method according to claim 10, wherein said flat elements are represented by metal sheets.

12. Method according to any one of the previous claims comprising making a mobile service platform inside the channel (6) said platform being vertically mobile inside the channel (6).

13. Method according to any one of the previous claims, wherein the tower is a prilling tower of a urea plant.
